# EUROPÄISCHE PATENTSCHRIFT

(11) **EP 1 863 658 B1**
(45) Veröffentlichungstag und Bekanntmachung des Hinweises auf die Patenterteilung: **14.01.2009**
(21) Anmeldenummer: 06725269.2
(22) Anmeldetag: 23.03.2006
(51) Int. Cl.: B60C 23/04

(54) **REIFENLUFTDRUCKÜBERWACHUNGSSYSTEM SOWIE VERFAHREN ZUR ZUORDNUNG VON REIFENMODULEN IN EINEM REIFENLUFTDRUCKÜBERWACHUNGSSYSTEM**
TYRE PRESSURE MONITORING SYSTEM AND METHOD FOR ALLOCATING A TYRE MODULE THERETO
SYSTEME DE SURVEILLANCE DE PRESSION DE GONFLAGE DE PNEU, ET PROCEDE D'AGENCEMENT DE MODULES DE PNEU DANS UN SYSTEME DE SURVEILLANCE DE PRESSION DE GONFLAGE DE PNEU

(30) Priorität: 01.04.2005 DE 102005015299; 18.03.2006 DE 102006012535
(43) Veröffentlichungstag der Anmeldung: 12.12.2007
(73) Patentinhaber: Continental Teves AG & Co. oHG, 60488 Frankfurt am Main (DE)
(72) Erfinder: HEISE, Andreas, 64390 Erzhausen (DE); BACHON, Jens, 65527 Niedernhausen (DE); KAMMANN, Stefan, 65779 Kelkheim (DE); HARTMANN, Ralf, 65830 Kriftel (DE); ERLER, Wolfgang, 65232 Taunusstein (DE); NEUMANN, Markus, 68259 Mannheim (DE); BÖS, Marco, 63607 Wächtersbach (DE); SÄGER, Peter, 61381 Friedrichsdorf (DE)
(86) Internationale Anmeldenummer: PCT/EP2006/060992
(87) Internationale Veröffentlichungsnummer: WO 2006/103195

(56) Entgegenhaltungen:
- EP-A- 1 211 104
- EP-A- 1 452 349
- WO-A-20/05018963

## Beschreibung

Die Erfindung betrifft ein Reifenluftdrucküberwachungssystem gemäß Oberbegriff von Anspruch 1 sowie ein Verfahren zur Zuordnung von Reifenmodulen in einem Reifenluftdrucküberwachungssystem für ein Kraftfahrzeug gemäß Oberbegriff von Anspruch 9.

Eine zuverlässige Überwachung des Reifenluftdrucks an allen Rädern eines Kraftfahrzeugs oder eines Kraftrades ist für die Sicherheit des Fahrzeuges von großer Bedeutung. Es existieren verschiedene Ansätze, wie die Reifenluftdrucküberwachungssysteme realisiert werden können. Bei den sogenannten direkt messenden Reifenluftdrucküberwachungssystemen wird der Reifenluftdruck direkt in den Reifen gemessen und mittels Sende- und Empfangseinrichtungen an eine Auswerteelektronik weitergeleitet. Ein solches direkt messendes Reifenluftdrucküberwachungssystem ist beispielsweise in der DE 199 38 431 C2 oder in der DE 199 15 999 C2 beschrieben. Üblicherweise wird der Reifenluftdruck mittels eines batteriegespeisten Druckmoduls erfasst und mittels einer Funkübertragung an eine oder mehrere Empfangsmodule gesendet. Aus der EP 0 806 307 B1 ist beispielsweise ein Verfahren zur Durchführung der Zuordnung der Radposition zu Luftdruckkontrollvorrichtungen in einem Luftdruckkontrollsystem eines Kraftfahrzeugs bekannt.

Die Schrift DE 196 32 150 B4 beschreibt ein Verfahren zur Kontrolle des Luftdrucks in den Reifen von Kraftfahrzeugrädern, bei dem mittels eines Langwellensignals genau eine Radelektronik zur Aussendung eines Datentelegramms mit einem speziellen Identifikationssignals angeregt wird, wobei das spezielle Identifikationssignal von einer Kontrolleinheit in der Radelektronik aus dem empfangenen Langwellensignal generiert wird. Durch sukzessives Anregen aller Radpositionen werden die Identifikationscodes der zugeordneten Radelektroniken erfasst. Dabei ist in oder an jedem Reifen eine Radelektronik angeordnet und jeder Radelektronik ist eine Langwelleneinheit zugeordnet, welche in der Nähe des entsprechenden Rades angeordnet ist.

In der EP 1 452 349 A2 wird eine Reifenzustandsüberwachungsvorrichtung offenbart, in welcher die Zuordnung von in den Reifen befindlichen Sendern zu rechten oder linken Rädern anhand von jeweils in den Reifen angeordneten Beschleunigungssensoren durchgeführt wird, welche eine Erkennung der Drehrichtung erlauben.

Ein Reifendruckkontrollsystem mit einem Messwertgeber an jedem Reifen und einem Triggermodul in der Nähe jedes Reifens zur Aktivierung des zugehörigen Messwertgebers wird in der WO 2005/018963 A1 beschrieben.

Bei dem in der EP 1 211 104 A2 beschriebenen Reifenzustandsüberwachungssystem ist ebenfalls jeder Reifensensoreinrichtung genau ein Triggermodul zugeordnet.

Aufgabe der Erfindung ist es, ein kostengünstiges Reifenluftdrucküberwachungssystem bereitzustellen, bei welchem eine zuverlässige Zuordnung von Reifenmodulen zu bestimmten Rad- oder Achspositionen möglich ist.

Diese Aufgabe wird erfindungsgemäß durch das Reifenluftdrucküberwachungssystem nach Anspruch 1 gelöst.

Erfindungsgemäß soll unter dem Begriff "Reifenmodul" eine Einrichtung zur Erfassung von Reifeninformationen, z. B. Reifenluftdruck, Reifentemperatur, etc., verstanden werden, welche unter anderem eine Sende- und Empfangseinrichtung zum Austausch von Steuer- und Datensignalen aufweist. Dieses Reifenmodul kann hierbei an der Felge oder dem Reifen eines Kraftfahrzeugrades angeordnet sein.

Unter dem Begriff "Identifikationsnummer" oder "Universal-ID" soll eine Kennung verstanden werden, die jedes Reifenmodul aufweist. Diese Kennung kann beispielsweise für alle Reifenmodule identisch sein, oder es werden unterschiedliche Identifikationsnummern für unterschiedliche Reifenmodultypen vergeben, oder jedes Reifenmodul weist eine unterschiedliche Identifikationsnummer, z. B. eine fortlaufende Zahl, auf. Mit Hilfe der Identifikationsnummer soll sichergestellt werden, dass nur Reifenmodule eingelernt werden, welche auch wirklich zu diesem Reifenluftdrucküberwachungssystem gehören.

Der Erfindung liegt der Gedanke zugrunde, dass das Reifendrucküberwachungssystem weniger Triggermodule als Reifenmodule aufweist. Hierdurch können die Herstellungskosten für das Reifendrucküberwachungssystem reduziert werden. Mindestens einem Triggermodul ist mehr als ein Reifenmodul zugeordnet. Des Weiteren weist das mindestens eine Reifenmodul, besonders bevorzugt jedes Reifenmodul, mindestens eine Einrichtung zur Erfassung der Signalstärke eines von dem/den Triggermodulen empfangenen Triggersignals auf, wobei das Reifenmodul die jeweils erfasste Signalstärke des Triggersignals an die Zentraleinheit überträgt. Eine Zuordnung der Reifenmodule zu den Radpositionen wird über eine Analyse der Signalstärke der von den Reifenmodulen empfangenen Triggersignale durchgeführt. Dies ist vor allem dann anwendbar, wenn sich die Reifenmodule in unterschiedlichen Abständen von dem/den Triggermodul(en) befinden.

In einer bevorzugten Ausführungsform des erfindungsgemäßen Reifendrucküberwachungssystems umfasst jedes Fahrzeugrad ein Reifenmodul.

In einer anderen bevorzugten Ausführungsform weist das mindestens eine Triggermodul, besonders bevorzugt jedes Triggermodul, mindestens eine Einrichtung zur Veränderung der Signalstärke des Triggersignals auf, um mit mindestens zwei unterschiedlichen Signalstärken des Triggersignals die Reifenmodule ansprechen zu können. Eine Zuordnung der Reifenmodule zu den Radpositionen ist dann möglich, wenn die einem Triggermodul zugeordneten zwei oder mehr Reifenmodule in unterschiedlichen Abständen von dem Triggermodul angebracht sind, da bei geeigneter Wahl der Abstände und Signalstärken z.B. bei geringer Signalstärke des Triggersignals nur das nächstliegende Reifenmodul erreichbar ist.

Es ist ebenfalls bevorzugt, dass mindestens ein Reifenmodul eine Einrichtung zur Erfassung der Drehrichtung des Reifen umfasst.

Besonders bevorzugt werden die verschiedenen Ausführungsformen zur Zuordnung der Reifenmodule zu den Radpositionen kombiniert, um eine besonders zuverlässige Zuordnung zu ermöglichen.

In einer bevorzugten Ausführungsform des erfindungsgemäßen Reifenluftdrucküberwachungssystems umfasst ein Triggermodul einen Schwingkreis, welcher mittels eines Schalters, insbesondere eines elektronischen Schalters, von einer sendenden Anordnung, bestehend aus einem Kondensator und einer Sendespule, zu einer nicht-sendenden Anordnung, bestehend aus dem Kondensator und einer nicht-sendenden Spule, umschaltbar ist. Hierdurch ist eine Modulation des vom Schwingkreis abgestrahlten Signals möglich, ohne die Schwingung des Schwingkreises zu unterbrechen.

Die Erfindung betrifft auch ein Verfahren zur Zuordnung von Reifenmodulen in einem Reifenluftdrucküberwachungssystem für ein Kraftfahrzeug.

Weitere bevorzugte Ausführungsformen des erfindungsgemäßen Reifenluftdrucküberwachungssystems sowie des erfindungsgemäßen Verfahrens ergeben sich aus den Unteransprüchen und der nachfolgenden Beschreibung von Ausführungsbeispielen anhand von Figuren.

Es zeigen:
- Fig. 1: eine erste Ausführungsform eines Reifenluftdrucküberwachungssystems,
- Fig. 2: eine zweite Ausführungsform eines Reifenluftdrucküberwachungssystems,
- Fig. 3: eine dritte Ausführungsform eines Reifenluftdrucküberwachungssystems,
- Fig. 4: eine vierte Ausführungsform eines Reifenluftdrucküberwachungssystems,
- Fig. 5: eine fünfte Ausführungsform eines Reifenluftdrucküberwachungssystems,
- Fig. 6: eine sechste Ausführungsform eines Reifenluftdrucküberwachungssystems, und
- Fig. 7: zwei Schwingkreisanordnungen.

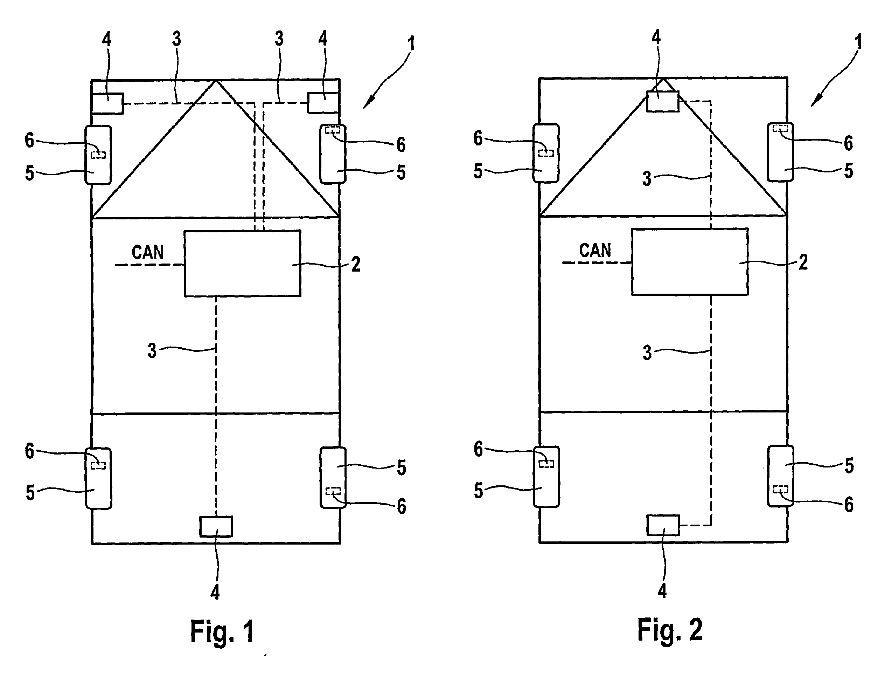

In Fig. 1 ist eine erste Ausführungsform eines Reifenluftdrucküberwachungssystems dargestellt. Hierbei ist in einem Kraftfahrzeug 1 eine Zentraleinheit (Receiver) 2 mit einer Anbindung an einen Fahrzeugdatenbus (CAN) angeordnet. Die Zentraleinheit 2 steht über Steuerleitungen 3 mit drei Triggermodulen 4 in Verbindung. Zwei dieser Triggermodule 4 sind hierbei jeweils in der Nähe eines Fahrzeugrades 5 der Vorderachse angeordnet, während das dritte Triggermodul 4 an der Hinterachse angeordnet ist. Die Triggermodule 4 senden nach Aufforderung der Zentraleinheit 2 einen Befehl an die in den Fahrzeugrädern 5 befindlichen Reifenmodule 6. Die Reifenmodule 6 führen diesen Befehl (z.B. Daten speichern oder Telegramm senden) aus. Wenn ein Telegramm angefordert worden ist, senden die Reifenmodule Daten (z.B. Reifeninformationen wie Reifenluftdruck, Reifentemperatur, Reifenherstellungsdatum, etc.) an die Zentraleinheit 2 aus. Die Ansteuerung der Reifenmodule 6 durch die Triggermodule erfolgt hierbei mit einer niedrigen Frequenz, insbesondere mit 125 kHz. Demgegenüber erfolgt die Datenübertragung von dem Reifenmodul 6 zu der Zentraleinheit 2 im Hochfrequenzbereich, insbesondere in den freigegebenen ISM Frequenzen (z. B. 13,56 MHz, 315 MHz, 433,92 MHz, 868 MHz, 2,45 GHz).

In Fig. 2 ist eine zweite Ausführungsform eines Reifenluftdrucküberwachungssystems dargestellt. Das Kraftfahrzeug 1 weist ebenfalls, wie bereits in Fig. 1, eine Zentraleinheit (Receiver) 2 mit einer Anbindung an einen Fahrzeugdatenbus (z.B. CAN) auf. Die Zentraleinheit 2 steht über Steuerleitungen 3 mit zwei Triggermodulen 4 in Verbindung, wobei die Triggermodule 4 wiederum nach Aufforderung der Zentraleinheit 2 einen Befehl an die in den Fahrzeugrädern 5 befindlichen Reifenmodule 6 senden. Hierbei ist das eine Triggermodul der Vorderachse, und das andere Triggermodul der Hinterachse des Fahrzeugs zugeordnet.

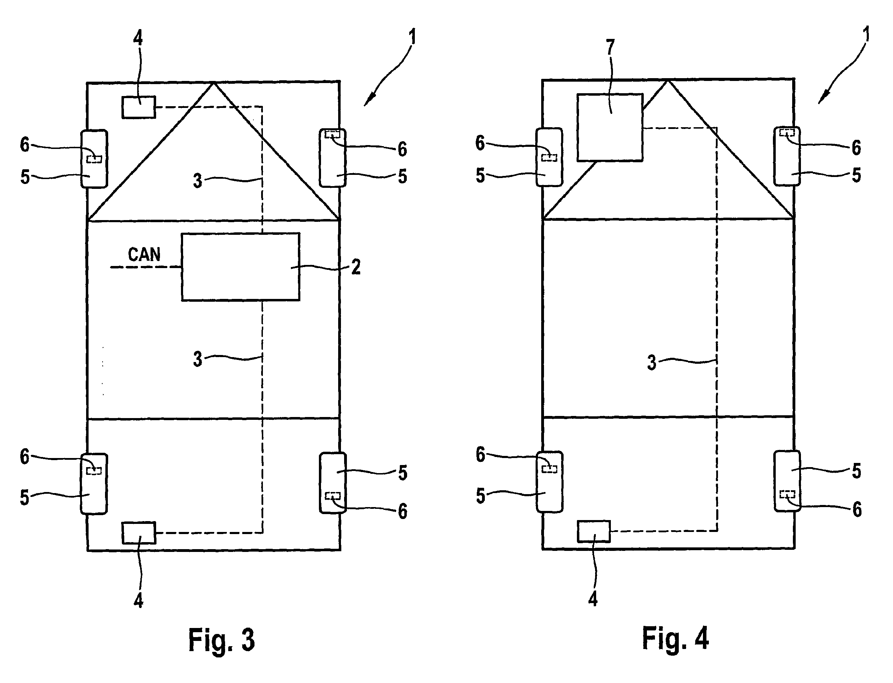

Eine dritte Ausführungsform eines Reifenluftdrucküberwachungssystems ist in Fig. 3 gezeigt. Der Aufbau entspricht hierbei, bis auf die asymmetrische Anordnung der Triggermodule 4, dem Aufbau gemäß der zweiten Ausführungsform. Die Triggermodule können hierbei zu einer Seite hin (beispielsweise beide zur linken Fahrzeugseite) oder diagonal (z.B. das Triggermodul der Vorderachse hin zur linken Fahrzeugseite, und das Triggermodul der Hinterachse zur rechten Fahrzeugseite) verschoben sein.

Fig. 4 stellt eine vierte Ausführungsform eines Reifenluftdrucküberwachungssystems dar. Hierbei wird, entgegen der zweiten und dritten Ausführungsform, eine integrierte Zentraleinheit 7 verwendet, welcher einen aus den Figuren 1 bis 3 bekannte Zentraleinheit 2 und ein Triggermodul umfasst. Die Anordnung der integrierten Zentraleinheit 7 erfolgt hierbei gemäß der Anordnung nach der zweiten oder dritten Ausführungsform (integrierte Zentraleinheit ist symmetrisch oder asymmetrisch einer Fahrzeugachse zugeordnet).

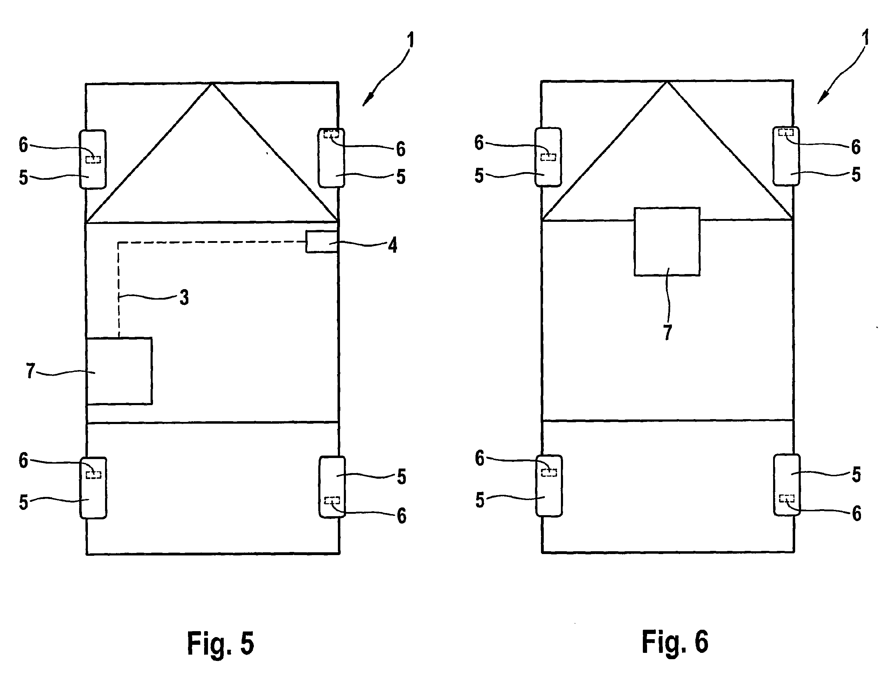

Eine fünfte Ausführungsform eines Reifenluftdrucküberwachungssystems ist in Fig. 5 gezeigt. Der Aufbau ist hierbei ähnlich wie der Aufbau der vierten Ausführungsform, wobei hier die integrierte Zentraleinheit 7 an einer Fahrzeugseite angeordnet ist, während ein Triggermodul 4 an der anderen Fahrzeugseite angeordnet ist. Die integrierte Zentraleinheit 7 und das Triggermodul 4 können hierbei auch näher in Richtung einer Fahrzeugachse (z.B. integrierte Zentraleinheit näher an der Hinterachse; Triggermodul näher an der Vorderachse) angeordnet sein.

Fig. 6 stellt eine sechste Ausführungsform eines Reifenluftdrucküberwachungssystems dar. Entgegen den vorherigen Ausführungsformen wird nur eine integrierte Zentraleinheit 7 ohne weitere Triggermodule verwendet. Die integrierte Zentraleinheit 7 wird hierbei entweder näher an der Vorderachse, oder näher an der Hinterachse angeordnet. Weiterhin kann die Zentraleinheit 7 auch zusätzlich näher an einer Fahrzeugseite angeordnet sein (asymmetrische Anordnung).

Selbstverständlich sind auch Kombinationen der zuvor beschriebenen Ausführungsformen denkbar. Als Beispiel sei hier eine Ausführungsform mit drei Triggermodulen, z.B. zwei Triggermodulen an der Vorderachse (wie in Fig. 1 gezeigt), und ein versetztes Triggermodul an der Hinterachse (wie in Fig. 3 gezeigt), denkbar.

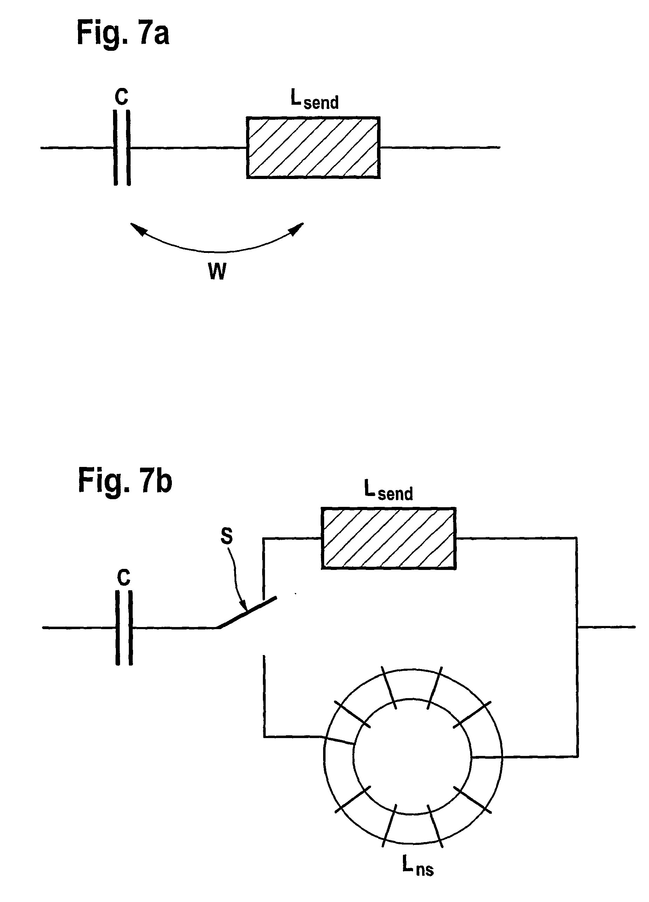

In Fig. 7 sind zwei Schwingkreisanordnungen dargestellt. Fig. 7a) zeigt eine bekannte Schwingkreisanordnung aus einem Kondensator C und einer Sendespule L_{send}, in denen abwechselnd eine Energie W gespeichert wird. Eine solche Anordnung wurde bisher zur Datenübertragung von den Triggermodulen 4 zu den Reifenmodulen 6 (Fig. 1 bis 6) in den Triggermodulen 4 verwendet. Beispielsweise erfolgt die Datenübertragung mittels einer Amplitudenmodulation (ASK) mit einer Frequenz von 125 kHz. Zur Datenübertragung vom Triggermodul 4 zum Reifenmodul 6 wird hierzu die Trägerfrequenz (125 kHz) mit einer variablen Frequenz amplitudenmoduliert (aus- und eingeschaltet).Nach jedem Aus- bzw. Einschalten ist eine Einschwingphase des Schwingkreises nötig, in welcher der Wirkungsgrad der Anordnung gering ist.

Um die Anschwingzeit und Abschaltzeit des Schwingkreises (Sendeleistung) zu verringern, ist in Fig. 7b) ein zweiter Schwingkreis dargestellt, welcher neben dem Kondensator C und der Sendespule L_{send} eine weitere, nicht sendende Spule Lₙₛ (beispielsweise ein Ringkern) aufweist. Über einen Schalter S (bevorzugt ein elektronischer Schalter) kann nun entweder ein erster Schwingkreis, bestehend aus dem Kondensator C und der Sendespule L_{send}, oder ein zweiter Schwingkreis, besteht aus dem Kondensator C und der nicht sendenden Spule Lₙₛ geschaltet werden. Die Energie wird im Schwingkreis abwechselnd im Kondensator C und in der Sendespule L_{send} bzw. der nicht sendenden Spule Lₙₛ gespeichert. In dem Moment wo die Energie im Kondensator C gespeichert ist kann zwischen der Sendespule L_{send} und der nicht sendenden Spule Lₙₛ umgeschaltet werden. Auf diese Weise ist eine Modulation des Signals möglich ohne die Schwingung des Schwingkreises zu unterbrechen. Es ist somit kein erneutes Anschwingen des Schwingkreises notwendig. Auch ein schnelles Abschalten der Sendeenergie durch Umschalten auf die nicht sendende Spule Lₙₛ ist möglich.

Bei dem Reifenluftdrucküberwachungssystem werden Reifeninformationen mit den Reifenmodulen 6 gemessen (z.B. Reifenluftdruck, Reifentemperatur) oder es werden charakteristische Reifendaten (z.B. Reifengröße, Herstellungsdatum, Laufleistung) aus einem Speicher in den Reifenmodulen 6 ausgelesen. Der Aufbau der Reifenmodule 6 umfasst hierbei eine Sende-/Empfangseinheit, ein oder mehrere Sensoren zu Erfassung von Reifeninformationen, mindestens einen Datenspeicher sowie eine Energieversorgung (üblicherweise eine Batterie). Die Reifenmodule 6 empfangen hierzu Daten (beispielsweise mit einer Frequenz von 125 kHz) von dem zugehörigen Triggermodul 4. Die Reifenmodule 6 senden auf einer festgelegten Frequenz (z.B. den freigegebenen ISM-Frequenzen 13,56 MHz, 315 MHz, 433,92 MHz, 868 MHz, 2,45 GHz) die Reifeninformationen, die charakteristischen Reifendaten und eine Identifikationsnummer (ID) oder Typnummer an die Zentraleinheit 2 oder die integrierte Zentraleinheit 7. Die Informationen aus den Reifenmodulen 6 können dann über einen Fahrzeugdatenbus (CAN) anderen Fahrzeugsystemen, wie einem Antiblockiersystem (ABS), einem elektronischen Stabilitätssystem (ESP) etc., zur Verfügung gestellt werden, um Regelprozesse in Abhängigkeit der erhaltenen Reifeninformationen zu beeinflussen. Die Reifeninformationen können auch dem Fahrzeugführer angezeigt werden, oder es kann eine Warnung an den Fahrzeugführer ausgegeben werden, wenn beispielsweise der Reifenluftdruck einen kritischen Wert unterschreitet.

Es kann auch das Reifenfertigungsdatum und ein aktuelles Datum im Fahrzeug (z.B. vorhandene Dashboardinformation über Normalzeit synchronisiert) ausgewertet werden, um dem Fahrer oder einer Servicestelle (z.B. Werkstatt) eine Überalterung der Reifen anzuzeigen.

Durch die in den Reifenmodulen 6 abgelegten reifenspezifischen Daten ist es möglich, bestimmte Komponenten (z.B. ein ABS, ESP, Lenkung, etc.) des Fahrzeugs auf die Reifen abzustimmen. Verbessert man zum Beispiel die Nass-Eigenschaften eines Reifens, verschlechtert sich die Lenkbarkeit bei trockener Straße - vor allem bei niedrigen Geschwindigkeiten. Ist solch eine Eigenschaft im Reifenmodul abgelegt, kann die Servolenkung dieses Manko - vom Fahrer weitgehend unbemerkt - ausgleichen. Es können also bewusst negative - aber ausgleichbare - Eigenschaften des Reifens in Kauf genommen werden um essentielle Eigenschaften des Reifens zu verbessern.

Während des Betriebs des Reifenluftdrucküberwachungssystems oder nur während eines Zuordnungsverfahrens werden die Reifenmodule mit einer oder mehreren sogenannten Universal-ID angesprochen. Weiterhin ist es somit möglich, auch bei einem Rad- oder Reifenwechsel (z.B. von Sommer- auf Winterreifen oder bei Neureifen) die nun neu vorhandenen Reifenmodule ansprechen zu können.

Bei einem Reifenluftdrucküberwachungssystem gemäß der ersten Ausführungsform (Fig. 1) erfolgt die Zuordnung der Reifenmodule 6 zu dem zugehörigen Triggermodul 4 dadurch, dass gezielt ein Triggermodul, beispielsweise das an der Radposition vorne links, von dem Zentralempfänger 2 angesprochen wird, damit dieses Triggermodul das Reifenmodul in seiner Nähe einlernt. Durch die geringe Sendereichweite des Triggermoduls ist sichergestellt, dass nur das Reifenmodul auf das Signal des Triggermoduls reagiert, welches sich in unmittelbarer Nähe des Triggermoduls befindet. Sind beispielsweise an der Vorderachse zwei Triggermodule angeordnet, so können die Reifenmodule in der Nähe des jeweiligen Triggermoduls eindeutig einer Radposition zugeordnet werden. Die Reifenmodule an der Hinterachse werden von einem einzigen Triggermodul angesprochen. Hierdurch ist zumindest die Zuordnung der beiden Reifenmodule zu der Hinterachse sichergestellt. Zur Zuordnung der beiden Reifenmodule zu einer Radposition (hier hinten links und hinten rechts) können mehrere Verfahren verwendet werden. Erstens kann mit Hilfe einer Drehrichtungserkennung eine Zuordnung erfolgen, oder, wenn das Triggermodul asymmetrisch (beispielsweise näher zum hinteren linken Rad) an der Achse angeordnet ist, kann eine Zuordnung über eine Auswertung der von den Reifenmodulen empfangen Triggerfeldstärke (Triggerintensität) erfolgen. Alternativ kann auch das Triggermodul mit unterschiedlichen Triggerfeldstärken Informationen senden, so dass bei einer asymmetrischen Anordnung des Triggermoduls an der Achse, bei einer geringen Triggerfeldstärke nur das Reifenmodul angesprochen wird, welches sich in der Nähe des Triggermoduls befindet.

Ein Reifenluftdrucküberwachungssystem gemäß der zweiten Ausführungsform (Fig. 2) weist lediglich zwei Triggermodule, eins an der Vorderachse, eins an der Hinterachse, auf. Die Zuordnung der Reifenmodule erfolgt hierbei zuerst achsbezogen, d.h. in einem ersten Schritt werden zwei Reifenmodule, nämlich die der Achse an dem sich das zuerst sendende Triggermodul befindet, angesprochen. Somit können jeweils zwei Reifenmodule einer Achse zugeordnet werden. Durch eine Drehrichtungserkennung ist es möglich zu erkennen, welches Reifenmodul sich an welcher Fahrzeugseite befindet. Ein Reifenmodul kann z.B. bei Empfang der Universal-ID ein Telegramm senden und darin die Drehrichtung mitteilen. Oder es werden gezielt, z.B. durch das Triggertelegramm, die Reifenmodule durch die Triggermodule richtungsgebunden angesprochen (z.B. ansprechen der linksdrehenden Räder durch einen Telegrammteil im Datentelegramm der Triggermodule oder der Universal-ID). Somit können alle Reifenmodule zugeordnet werden, wodurch zukünftig ein gezieltes Ansprechen der Reifenmodule erfolgen kann. Bei kostengünstigen Systemen kann auch auf eine Drehrichtungserkennung verzichtet werden. Hier werden dann die Reifenmodule jeweils nur einer Fahrzeugachse zugeordnet.

Eine Möglichkeit zur Drehrichtungserkennung besteht darin, dass das Reifenmodul zwei Beschleunigungssensoren aufweist, welche getrennt voneinander positioniert sind, und welche die Beschleunigung in radialer Richtung messen. Durch eine versetzte Anordnung der beiden Beschleunigungssensoren wird auch der Beschleunigungsimpuls beim Latschein- bzw. austritt versetzt voneinander erkannt. Dieser Laufzeitunterschied ist auswertbar und kann als Indikator für die Drehrichtung dienen.

Zur Zuordnung der Reifenmodule zu einer Radposition können auch weitere vorhandene Fahrzeuginformationen, wie der Lenkwinkel oder die Raddrehzahlinformationen von Raddrehzahlsensoren eines Antiblockiersystems (ABS) genutzt werden. Hierbei messen die Reifenmodule auf Anforderungsbefehl durch das oder die Triggermodul/e die Dauer einer oder mehrerer Radumdrehungen aus. Hierzu kann z.B. die Beschleunigungsänderung bei Latscheintritt ausgewertet werden. Oder es wird eine Periodizität der Triggerintensität über den Radumfang ausgemessen. Über die Auswertung des Lenkwinkels und der Drehgeschwindigkeiten der Räder (Raddrehzahlsensoren des ABS) können z.B. bei einer Kurvenfahrt (erkannt über Lenkwinkel) durch die erkannten Unterschiede zwischen den linken und rechten Fahrzeugrädern (erkannt über die Raddrehzahlsensoren) die Reifenmodule einer Radposition zugeordnet werden. Zusätzlich können durch eine Sensierung der Radumdrehungszeit bei Geradeausfahrt (erkannt z.B. über Lenkwinkel) unterschiedliche Raddurchmesser, z.B. aufgrund unterschiedlich abgenutzter/ abgefahrener Reifen an einer Achse, herauskalibrieren werden.

Der Aufbau der dritten Ausführungsform (Fig. 3) des Reifenluftdrucküberwachungssystems ist ähnlich dem der zweiten Ausführungsform. Allerdings sind hierbei die Triggermodule asymmetrisch angeordnet. Die Zuordnung der Reifenmodule zu den Radpositionen erfolgt hierbei über eine Modulation der Sendefeldstärke der Triggermodule oder über eine Feldstärkemessung in den Reifenmodulen.

Bei der Zuordnung durch Modulation der Sendefeldstärke wird hierbei zuerst auf ein von dem Triggermodul ausgeendetes Signal mit einer geringen Feldstärke nur ein Reifenmodul reagieren, nämlich das dem Triggermodul räumlich näherliegenden Reifenmodul. Dieses Reifenmodul kann dadurch einer Radposition zugeordnet werden. Anschließend sendet das Triggermodul ein Signal mit einer größeren Sendefeldstärke, sodass zwei Reifenmodule, nämlich beide Reifenmodule an dieser Achse, auf das Signal reagieren. Hierdurch ist nun auch das zweite Reifenmodul dieser Achse eindeutig bestimmt und kann zugeordnet werden.

Bei der Zuordnung durch Feldstärkenmessung in den Reifenmodulen wird in der Zentraleinheit ausgewertet, welche Empfangsfeldstärke vorliegt. Das Reifenmodul mit der größten Empfangsfeldstärke wird von der Zentraleinheit als das räumlich näher zum Triggermodul angeordnete Reifenmodul betrachtet, und dementsprechend zugeordnet. Hierdurch ist auch das andere Reifenmodul dieser Achse eindeutig bestimmt. Diese Zuordnung kann durch bekannte Auswertungsverfahren statistisch abgesichert werden.

Bei einem Reifenluftdrucküberwachungssystem gemäß der vierten Ausführungsform (Fig. 4) erfolgt die Zuordnung wie bei der dritten Ausführungsform.

Bei der fünften Ausführungsform des Reifenluftdrucküberwachungssystems (Fig. 5) erfolgt die Zuordnung analog zur dritten Ausführungsform, wobei hier allerdings keine achsweise (Vorderachse bzw. Hinterachse) Zuordnung des Triggermoduls und des integrierten Zentralempfängers vorgenommen wird, sondern eine seitenweise (linke bzw. rechte Fahrzeugseite) Zuordnung erfolgt.

Bei einem Reifenluftdrucküberwachungssystem gemäß der sechsten Ausführungsform (Fig. 6) werden bei einer geringen Sendeleistung nur die Reifenmodule reagieren, welche sich in der Nähe der integrierten Zentraleinheit befinden, beispielsweise die Reifenmodule der Vorderachse. Über eine Drehrichtungserkennung können dann wieder die Reifenmodule einer Radposition zugeordnet werden. Mit einer größeren Sendeleistung des Triggermoduls werden alle Reifenmodule angesprochen. Hierdurch können die beiden übrigen Reifenmodule der anderen Achse, z.B. der Hinterachse zugeordnet werden. Die Zuordnung dieser beiden Reifenmodule an der Hinterachse erfolgt wieder über eine Drehrichtungserkennung. Bei günstigen Systemen erfolgt wiederum nur eine Zuordnung der Reifenmodule zu den Achsen, eine Drehrichtungserkennung findet nicht statt.

Darüber hinaus kann bei allen genannten Ausführungsformen alternativ oder zusätzlich noch die LF-Triggerintensität, d.h. die Intensität des 125 kHz Triggersignals, im Reifenmodul detektiert werden. Die LF-Triggerintensität kann bei Übersprechen eines Triggersignals von einem Triggermodul auf mehrere Reifenmodule zur Detektierung des einem Rad zugeordneten Triggermoduls verwendet werden.

Weiterhin besteht die Möglichkeit bei Verwendung von weniger als einem Triggermodul pro Radposition die Lokalisierung der Reifenmodule hiermit zu erreichen oder zu unterstützen. Weiterhin besteht die Möglichkeit die Triggerenergie der tatsächlich benötigten Triggerenergie für eine zuverlässige Übertragung anzupassen.

Um zu gewährleisten, dass nur die eigenen, d.h. zu dem Fahrzeug zugehörigen, Reifenmodule 6, und nicht etwa Reifenmodule anderer Fahrzeuge, welche sich z.B. in der Nähe des eigenen Fahrzeugs befinden, abgefragt werden, erfolgt eine Zuordnung der Reifenmodule 6 zu dem Fahrzeug in dem Lernprogramm. Um auch einen möglichst geringen Energieverbrauch der in den Reifenmodulen 6 eingebauten Batterien zu erreichen, wird darüber hinaus jedem Reifenmodul 6 eine individuelle Identifikationsnummer (ID) vom Reifenluftdrucküberwachungssystem zugewiesen, damit jeweils ein Reifenmodul 6 nur auf Sendesignale des zugehörigen Triggermoduls 4 reagiert, wenn ein Datenaustausch mit dem Reifenmodul 6 stattfinden soll. Hierzu wird eine sogenannte LF-ID (Low Frequency Identifier: niedrig Frequenz Identifikationsnummer) verwendet, wodurch sichergestellt wird, dass nur bei einem gewünschten Datenaustausch zwischen dem Triggermodul bzw. der (integrierten) Zentraleinheit und dem Reifenmodul das Reifenmodul in den Betriebszustand versetzt wird. Somit kann eine Störung, welche zufälligerweise dieselbe Frequenz (z. B. 125 kHz) aufweist, oder ein Triggersignal eines anderen Moduls, z.B. eines vorbeifahrenden Fahrzeugs, nicht dazu führen, dass die Reifenmodule in den Betriebszustand versetzt werden. Werden Räder, z.B. nach einem Reifenwechsel, an einer anderen Radposition (Rad vorne links, Rad hinten rechts, Rad vorne rechts, Rad hinten links) montiert, so wird, nachdem das nun an einer "falschen" Radposition befindliche Reifenmodul nicht mit der für diese Radposition vergebenen ID angesprochen werden kann, über die Universal-ID neu eingelernt, d.h. es wird eine neue ID für dieses Reifenmodul vergeben, oder es erfolgt eine neue Zuordnung. Alternativ können auch erst alle bereits bekannten IDs (z.B. die IDs der Sommer- und der Winterreifen) abgefragt werden, bevor gegebenenfalls eine neue Zuordnung erfolgt.

Die Zuordnung der Reifenmodule zu den Radpositionen bei hier nicht näher beschriebenen Ausführungsformen kann auf naheliegende Weise durch Kombination der beschriebenen Zuordnungsverfahren erreicht werden.

Darüber hinaus kann auch ein Reifenmodul zur Zuordnung der Reifenmodule zu den Radpositionen von mehreren Triggermodulen angesprochen werden.

In dem Reifenmodul kann eine Information abgespeichert werden, wenn sich dieses Reifenmodul über einen längeren Zeitraum in einem drehenden Rad (Erkennung z.B. über einen Beschleunigungssensor) befindet, es aber nicht mit einem Triggermodul Daten ausgetauscht hat. Hierdurch soll vermieden werden, dass ein Reifen in einem falschen Fahrzeug benutzt wird (Misuse-Erkennung). Auch weitere Informationen über diesen "Misuse" können abgelegt werden (z.B. Dauer, Fahrzeuggeschwindigkeit, etc.).

Darüber hinaus können Änderungen der Druckwarnschwellen, d.h. ab wann dem Fahrzeugführer mitgeteilt wird, dass ein zu geringer Reifenluftdruck vorliegt, für ein und denselben Reifen achsbezogen und/oder fahrzeugklassenbezogen definiert werden. Weiterhin können Fahrzeug-Kennfeldern und/oder Reifenkennfelder bestimmt werden, welche eine Zuordnung auch bisher unbekannter Reifen (neue Typen) erlauben, wodurch diese sinnvoll verwendbar werden.

Das Reifenluftdrucküberwachungssystem kann auch in einem Alarmanlagensystem verwendet werden. Hierzu wird mindestens ein Reifenmodul in einen sogenannten Alarmanlagenmodus geschaltet, z.B. über ein Signal von dem/den Triggermodul/en. Durch die Überwachung des Reifendrucks und/oder der Temperatur und/oder Beschleunigungsinformationen und/oder Entfernungserkennung (Sende-/Empfangsleistung; der Reifen wird demontiert, der Datenaustausch zwischen Reifenmodul und Triggermodul ist unterbrochen) kann die Alarmanlage bei definierten Abweichungen ausgelöst oder in eine Vorwarnstufe gebracht werden. Die Vorwarnstufe gibt der Alarmanlage hierbei einen Hinweis darauf, dass möglicherweise ein Einbruch und/oder ein Diebstahl des Fahrzeugs oder Fahrzeugteile vorliegen könnte. Die Alarmanlage wird durch diesen Hinweis in einem anderen Empfindlichkeitsbereich betrieben, wodurch Veränderungen am Fahrzeug sensibler erkannt werden.

Weiterhin kann das Reifenluftdrucküberwachungssystem die Sendefunktion eines oder mehrerer Reifenmodule/s nutzen, um Informationen im Nahbereich des Fahrzeugs absetzen zu können. Z.B. SOS Funktion wenn das Fahrzeug in den Graben gefahren ist, oder wenn eine Airbagauslösung stattgefunden hat, oder um z.B. einer Waschanlage, der Zulassungsstelle oder anderen Einrichtungen Informationen zukommen zu lassen). Das Reifenmodul kann so ausgeführt sein, dass bei bestimmten Funktionen (SOS) die Sendeleistung (und somit die Reichweite) erhöht wird.

## Patentansprüche

1. Reifenluftdrucküberwachungssystem für Kraftfahrzeuge, mit einer Zentraleinheit (2, 7) mit zumindest einem in der Zentraleinheit integrierten oder über Steuerleitungen (3) mit der Zentraleinheit verbundenen Triggermodul (4) und mindestens einem in einem Fahrzeugrad (5) angeordneten Reifenmodul (6), wobei das Reifenmodul mit der Zentraleinheit und dem Triggermodul mittels einer drahtlosen Übertragungstechnik in Verbindung steht, und wobei das Reifenluftdrucküberwachungssystem weniger Triggermodule als Reifenmodule aufweist, **dadurch gekennzeichnet, dass** das mindestens eine Reifenmodul (6), insbesondere jedes Reifenmodul, mindestens eine Einrichtung zur Erfassung einer von dem/den Triggermodul(en) (4) empfangenen Triggerfeldstärke aufweist, wobei das Reifenmodul die jeweils erfasste Triggerfeldstärke an die Zentraleinheit (2, 7) überträgt.

2. Reifenluftdrucküberwachungssystem nach Anspruch 1, **dadurch gekennzeichnet, dass** dieses jeweils ein Reifenmodul (6) pro Fahrzeugrad (5) umfasst.

3. Reifenluftdrucküberwachungssystem nach Anspruch 1 oder 2, **dadurch gekennzeichnet, dass** mindestens ein Triggermodul (4), insbesondere jedes Triggermodul, mindestens eine Einrichtung zur Veränderung einer Triggerfeldstärke aufweist, um mit mindestens zwei unterschiedlichen Triggerfeldstärken die Reifenmodule (6) ansprechen zu können.

4. Reifenluftdrucküberwachungssystem nach mindestens einem der Ansprüche 1 bis 3, **dadurch gekennzeichnet, dass** mindestens ein Reifenmodul (6) eine Einrichtung zur Erfassung der Drehrichtung des Reifen umfasst.

5. Reifenluftdrucküberwachungssystem nach mindestens einem der vorherigen Ansprüche, **dadurch gekennzeichnet, dass** das mindestens eine Triggermodul, insbesondere jedes Triggermodul, Daten mit einer Frequenz im Bereich von etwa 20 bis etwa 300 kHz, insbesondere mit einer Frequenz im Bereich von etwa 100 bis etwa 150 kHz, an ein Reifenmodul aussendet, während das mindestens eine Reifenmodul, insbesondere jedes Reifenmodul, mit einer Frequenz im Bereich von etwa 1 MHz bis etwa 5 GHz Daten an die Zentraleinheit sendet.

6. Reifenluftdrucküberwachungssystem nach mindestens einem der vorherigen Ansprüche, **dadurch gekennzeichnet, dass** das mindestens eine Reifenmodul (6), insbesondere jedes Reifenmodul, einen beschreibbaren Datenspeicher aufweist, in welchem charakteristische Reifendaten abgelegt sind und/oder werden.

7. Reifenluftdrucküberwachungssystem nach mindestens einem der vorherigen Ansprüche, **dadurch gekennzeichnet, dass** das mindestens eine Triggermodul (4), insbesondere jedes Triggermodul, einen Schwingkreis aufweist, welcher mittels eines Schalters (S), insbesondere eines elektronischen Schalters, von einer sendenden Anordnung, bestehend aus einem Kondensator (C) und einer Sendespule (L_{send}), zu einer nicht-sendenden Anordnung, bestehend aus dem Kondensator (C) und einer nicht-sendenden Spule (Lₙₛ), umschaltbar ist.

8. Reifenluftdrucküberwachungssystem nach mindestens einem der vorherigen Ansprüche, **dadurch gekennzeichnet, dass** das mindestens eine Reifenmodul (6), insbesondere jedes Reifenmodul, eine Universal-Identifikationsnummer in sich trägt, mit welcher es in einem Radpositionszuordnungsprozess von dem/den Triggermodul(en) (4) angesprochen werden kann, und wobei das mindestens eine Reifenmodul, insbesondere jedes Reifenmodul, einen Datenspeicher aufweisen, in welchem nach erfolgter Zuordnung des Reifenmoduls zu einer Radposition eine individuelle Identifikationsnummer gespeichert wird, mit welcher das Reifenmodul zukünftig von dem/den Triggermodul(en) angesprochen wird.

9. Verfahren zur Zuordnung von Reifenmodulen in einem Reifenluftdrucküberwachungssystem in Kraftfahrzeugen, wobei das Reifenluftdrucküberwachungssystem eine Zentraleinheit (2, 7) mit zumindest einem in der Zentraleinheit integrierten oder über Steuerleitungen (3) mit der Zentraleinheit verbundenen Triggermodul (4) und jeweils ein Reifenmodul (6) pro Fahrzeugrad (5), wobei das Reifenmodul mit der Zentraleinheit und dem Triggermodul mittels einer drahtlosen Übertragungstechnik in Verbindung steht, aufweist, und wobei mindestens ein Triggermodul mit mehr als einem Reifenmodul drahtlosen in Verbindung steht, **dadurch gekennzeichnet, dass** die Reifenmodule über eine Feldstärkenanalyse der von den Reifenmodulen empfangenen Triggerfeldstärke zugeordnet werden.

10. Verfahren nach Anspruch 9, **dadurch gekennzeichnet, dass** die Reifenmodule über eine Veränderung der Sendefeldstärke der Triggermodule zugeordnet werden.

11. Verfahren nach Anspruch 9 oder 10, **dadurch gekennzeichnet, dass** die Reifenmodule durch eine Drehrichtungserkennung zugeordnet werden.

12. Verfahren nach mindestens einem der Ansprüche 9 bis 11, **dadurch gekennzeichnet, dass** die Reifenmodule von dem/den Triggermodul(en) mit einer Universal-Identifikationsnummer angesprochen werden.

13. Verfahren nach Anspruch 12, **dadurch gekennzeichnet, dass** durch die Zentraleinheit ein Befehl an das/die Triggermodul(e) zur Aussendung einer Universal-Identifikationsnummer gegeben wird.

14. Verfahren nach mindestens einem der Ansprüche 9 bis 13, **dadurch gekennzeichnet, dass** jedem Reifenmodul nach der Zuordnung zu einer Radposition eine individuelle Identifikationsnummer zugewiesen wird.

15. Verfahren nach mindestens einem der Ansprüche 9 bis 14, **dadurch gekennzeichnet, dass** die Zuordnung der Reifenmodule zu den Radpositionen durch Auswertung von Lenkwinkelinformationen und/oder Raddrehzahlinformationen durchgeführt wird.

## Claims

1. Tyre air pressure monitoring system for motor vehicles, having a central processor unit (2, 7) with at least one trigger module (4) which is integrated into the central processor unit or connected to the central processor unit via control lines (3) and at least one tyre module (6) which is arranged in a vehicle wheel (5), wherein the tyre module is connected to the central processor unit and to the trigger module by means of a wireless transmission technology, and wherein the tyre air pressure monitoring system has fewer modules than tyre modules, **characterized in that** the at least one tyre module (6), in particular each tyre module, has at least one device for sensing a trigger field strength which is received by the trigger module or modules (4), wherein the tyre module transmits the respectively sensed trigger field strength to the central processor unit (2, 7).

2. Tyre air pressure monitoring system according to Claim 1, **characterized in that** said tyre air pressure monitoring system respectively comprises one tyre module (6) per vehicle wheel (5).

3. Tyre air pressure monitoring system according to Claim 1 or 2, **characterized in that** at least one trigger module (4), in particular each trigger module, has at least one device for changing a trigger field strength in order to be able to address the tyre modules (6) with at least two different trigger field strengths.

4. Tyre air pressure monitoring system according to at least one of Claims 1 to 3, **characterized in that** at least one tyre module (6) comprises a device for sensing the direction of rotation of the tyre.

5. Tyre air pressure monitoring system according to at least one of the preceding claims, **characterized in that** the at least one trigger module, in particular each trigger module, emits data with a frequency in the range from approximately 20 to approximately 300 kHz, in particular with a frequency in the range from approximately 100 to approximately 150 kHz, to a tyre module, while the at least one tyre module, in particular each tyre module, transmits data with a frequency in the range from approximately 1 MHz to approximately 5 GHz to the central processor unit.

6. Tyre air pressure monitoring system according to at least one of the preceding claims, **characterized in that** the at least one tyre module (6), in particular each tyre module, has a data memory which can be written to and in which characteristic tyre data are stored and/or input for storage.

7. Tyre air pressure monitoring system according to at least one of the preceding claims, **characterized in that** the at least one trigger module (4), in particular each trigger module, has an oscillatory circuit which can be switched by means of a switch (S), in particular an electronic switch, from a transmitting arrangement, composed of a capacitor (C) and a transmitting coil (Lₜᵣₐₙₛ), to a non-transmitting arrangement, composed of the capacitor (C) and a non-transmitting coil (Lₙₛ).

8. Tyre air pressure monitoring system according to at least one of the preceding claims, **characterized in that** the at least one tyre module (6), in particular each tyre module, has a universal identification number with which it can be addressed by the trigger module or modules (4) in a wheel position assignment process, and wherein the at least one tyre module, in particular each tyre module, has a data memory in which, after the tyre module has been assigned to a wheel position, an individual identification number is stored, with which identification number the tyre module is addressed in future by the trigger module or modules.

9. Method for assigning tyre modules in a tyre air pressure monitoring system in motor vehicles, wherein the tyre air pressure monitoring system has a central processor unit (2, 7) with at least one trigger module (4) which is integrated into the central processor unit or connected to the central processor unit via control lines (3), and in each case one tyre module (6) per vehicle wheel (5), wherein the tyre module is connected to the central processor unit and to the trigger module by means of a wireless transmission technology, and wherein at least one trigger module is connected to more than one tyre module in a wireless fashion, **characterized in that** the tyre modules are assigned, by means of a field strength analysis, to the trigger field strength which is received by the tyre modules.

10. Method according to Claim 9, **characterized in that** the tyre modules are assigned to the trigger modules by changing the transmission field strength.

11. Method according to Claim 9 or 10, **characterized in that** the tyre modules are assigned by detection of the direction of rotation.

12. Method according to at least one of Claims 9 to 11, **characterized in that** the tyre modules are addressed by the trigger module or modules with a universal identification number.

13. Method according to Claim 12, **characterized in that** the central processor unit transmits an instruction to the trigger module or modules to output a universal identification number.

14. Method according to at least one of Claims 9 to 13, **characterized in that,** after the assignment to a wheel position, each tyre module is assigned an individual identification number.

15. Method according to at least one of Claims 9 to 14, **characterized in that** the assignment of the tyre modules to the wheel positions is carried out by evaluating steering angle information and/or wheel speed information.

## Revendications

1. Système de surveillance de la pression des pneumatiques pour véhicules automobiles, comprenant une unité centrale (2, 7) avec au moins un module de déclenchement (4) intégré dans l'unité centrale ou relié avec l'unité centrale par le biais de lignes de commande (3) et au moins un module de pneumatique (6) disposé dans une roue de véhicule (5), le module de pneumatique étant en liaison avec l'unité centrale et le module de déclenchement au moyen d'une technique de transmission sans fil et le système de surveillance de la pression des pneumatiques présentant moins de modules de déclenchement que de modules de pneumatique, **caractérisé en ce que** le au moins un module de pneumatique (6), plus particulièrement, chaque module de pneumatique, présente au moins un dispositif pour détecter une intensité de champ de déclenchement reçue par le/les module(s) de déclenchement (4), le module de pneumatique transmettant l'intensité de champ de déclenchement à chaque fois détectée à l'unité centrale (2, 7).

2. Système de surveillance de la pression des pneumatiques selon la revendication 1, **caractérisé en ce que** celui-ci comprend à chaque fois un module de pneumatique (6) par roue de véhicule (5).

3. Système de surveillance de la pression des pneumatiques selon la revendication 1 ou 2, **caractérisé en ce qu'**au moins un module de déclenchement (4), plus particulièrement chaque module de déclenchement, présente au moins un dispositif pour modifier une intensité de champ de déclenchement afin de pouvoir faire entrer en contact les modules de pneumatique (6) avec au moins deux intensités de champ de déclenchement différentes.

4. Système de surveillance de la pression des pneumatiques selon au moins l'une des revendications 1 à 3, **caractérisé en ce qu'**au moins un module de pneumatique (6) comprend un dispositif pour détecter le sens de rotation du pneumatique.

5. Système de surveillance de la pression des pneumatiques selon au moins l'une des revendications précédentes, **caractérisé en ce que** l'au moins un module de déclenchement, plus particulièrement chaque module de déclenchement, émet des données à une fréquence dans la plage allant d'environ 20 kHz à environ 300 kHz, notamment à une fréquence dans la plage allant d'environ 100 kHz à environ 150 kHz, à un module de pneumatique, alors que l'au moins un module de pneumatique, plus particulièrement chaque module de pneumatique, envoie des données à l'unité centrale à une fréquence dans la plage allant d'environ 1 MHz à environ 5 GHz.

6. Système de surveillance de la pression des pneumatiques selon au moins l'une des revendications précédentes, **caractérisé en ce que** l'au moins un module de pneumatique (6), plus particulièrement chaque module de pneumatique, présente une mémoire de données inscriptible dans laquelle sont et/ou seront stockées des données caractéristiques de pneumatique.

7. Système de surveillance de la pression des pneumatiques selon au moins l'une des revendications précédentes, **caractérisé en ce que** l'au moins un module de déclenchement (4), plus particulièrement chaque module de déclenchement, présente un circuit oscillant qui peut être permuté au moyen d'un commutateur (S), notamment un commutateur électronique, d'une disposition émettrice, constituée d'un condensateur (C) et d'une bobine émettrice (L_{send}), vers une disposition non émettrice, constituée du condensateur (C) et d'une bobine non émettrice (Lₙₛ).

8. Système de surveillance de la pression des pneumatiques selon au moins l'une des revendications précédentes, **caractérisé en ce que** le au moins un module de pneumatique (6), plus particulièrement chaque module de pneumatique, porte en lui un numéro d'identification universel par lequel le/les module(s) de déclenchement (4) peuvent entrer en contact avec lui dans un processus d'affectation de position de roue et l'au moins un module de pneumatique, plus particulièrement chaque module de pneumatique, présente une mémoire de données dans laquelle, après l'affectation réussie du module de pneumatique à une position de roue, un numéro d'identification individuel est enregistré par lequel le/les module(s) de déclenchement entre(nt) en contact désormais avec le module de pneumatique.

9. Procédé d'affectation de modules de pneumatique dans un système de surveillance de la pression des pneumatiques dans des véhicules automobiles, le système de surveillance de la pression des pneumatiques comprenant une unité centrale (2, 7) avec au moins un module de déclenchement (4) intégré dans l'unité centrale ou relié avec l'unité centrale par le biais de lignes de commande (3) et à chaque fois un module de pneumatique (6) par roue de véhicule (5), le module de pneumatique étant en liaison avec l'unité centrale et le module de déclenchement au moyen d'une technique de transmission sans fil et au moins un module de déclenchement étant en liaison sans fil avec plus d'un module de pneumatique, **caractérisé en ce que** les modules de pneumatique sont affectés par le biais d'une analyse d'intensité de champ de l'intensité de champ de déclenchement reçue par les modules de pneumatique.

10. Procédé selon la revendication 9, **caractérisé en ce que** les modules de pneumatique sont affectés par le biais d'une modification de l'intensité de champ d'émission des modules de déclenchement.

11. Procédé selon la revendication 9 ou 10, **caractérisé en ce que** les modules de pneumatique sont affectés par une détection du sens de rotation.

12. Procédé selon au moins l'une des revendications 9 à 11, **caractérisé en ce que** le/les module(s) de déclenchement entre(nt) en contact avec les modules de pneumatique par un numéro d'identification universel.

13. Procédé selon la revendication 12, **caractérisé en ce qu'**une instruction est délivrée par l'unité centrale au/aux module(s) de déclenchement pour l'émission d'un numéro d'identification universel.

14. Procédé selon au moins l'une des revendications 9 à 13, **caractérisé en ce qu'**un numéro d'identification individuel est attribué à chaque module de pneumatique après son affectation à une position de roue.

15. Procédé selon au moins l'une des revendications 9 à 14, **caractérisé en ce que** l'affectation des modules de pneumatique aux positions de roue est effectuée en évaluant des informations d'angle de direction et/ou des informations de vitesse de rotation de roue.
